# EUROPEAN PATENT APPLICATION

(11) **EP 4 427 575 A1**
(43) Date of publication of application: **11.09.2024**
(21) Application number: 24162341.2
(22) Date of filing: 08.03.2024
(51) Int. Cl.: A01D 46/30

(54) **A HARVESTING SYSTEM AND METHOD FOR AUTONOMOUS HARVESTING OF FRUIT**

(30) Priority: 08.03.2023 NL 2034281
(71) Applicant: Riwo Escrow B.V., 7575 EJ Oldenzaal (NL)
(72) Inventor: Spit, Willem Antonius, 7575 EJ Oldenzaal (NL)
(74) Representative: de Jong, Maurits David

(57) **Abstract**

The invention relates to a harvesting system for autonomous harvesting of fruit, such as for instance pome fruit such as apples or stone fruit, comprising:
- at least one collecting subsystem comprising a collecting opening, which collecting opening is connected to a collecting reservoir for collecting and storing harvested fruits, and wherein the collecting opening is autonomously displaceable in a collecting range;
- at least one harvesting subsystem comprising a first robotic manipulator with a harvesting end effector configured to harvest a specific fruit in a harvesting range;
- a detection subsystem, such as for instance a computer vision subsystem, configured to detect and localize at least in the harvesting range unharvested fruits;
- a computer-implemented control configured to control the movements of the at least one harvesting subsystem and the at least one collecting subsystem in coordinated manner and wherein the control is configured to select from the unharvested fruits detected and localized by the detection subsystem in the harvesting range a specific fruit to be harvested and to position the harvesting end effector for harvesting the specific fruit, and wherein the control is also configured to displace the at least one collecting opening to a position close to the specific fruit so that the harvesting end effector can release the specific fruit into the nearby collecting opening after harvesting thereof.

The invention also relates to a method for autonomous harvesting of unharvested fruit, such as for instance pome fruit such as apples or stone fruit, with a system according to the invention.

## Description

The invention relates to a harvesting system for autonomous harvesting of fruit, such as for instance pome fruit such as apples or stone fruit. The invention also relates to a method for autonomous harvesting of unharvested fruit, such as for instance pome fruit such as apples or stone fruit, with a system according to the invention.

For harvesting of fruit such as pome fruit, such as apples and pears, or stone fruit use is traditionally often made of (seasonal) workers who pick or otherwise harvest manually. Due to the lower availability of such workers and due to rising labour costs, it is desirable if the harvesting can be done by fewer workers.

Developments are known for autonomous harvesting of fruit, wherein the manual harvesting operation is automated by means of a robotic manipulator. Providing an end effector tailored to the fruit for harvesting on the manipulator enables a part of the operations necessary for harvesting to be performed by a machine. For picking apples use can thus for instance be made of an end effector in the form of a gripper which obtains a grip on the apple by means of for instance a suction cup provided with underpressure, after which it is rotated in order to detach the apple at the natural break-off surface at the attachment. The gripper can then transport the apple to a collecting location and there carefully release it.

A drawback of such a harvesting device is that the cycle time between two successive harvesting operations is relatively long in that the harvested fruit must in the interim in each case be carefully transported to the collecting point and placed or released. This drawback is further emphasized in that the branches of fruit-bearing crops often have an irregular progression, whereby repositioning of the end effector for the subsequent harvesting operation also requires relatively complex displacement in each case.

It is now an object of the invention to reduce or even obviate the above stated drawbacks.

This object is achieved according to the invention with a harvesting system for autonomous harvesting of fruit, such as for instance pome fruit such as apples or stone fruit, comprising:
- at least one collecting subsystem comprising a collecting opening, which collecting opening is connected to a collecting reservoir for collecting and storing harvested fruits, and wherein the collecting opening is autonomously displaceable in a collecting range;
- at least one harvesting subsystem comprising a first robotic manipulator with a harvesting end effector configured to harvest a specific fruit in a harvesting range;
- a detection subsystem, such as for instance a computer vision subsystem, configured to detect and localize at least in the harvesting range unharvested fruits;
- a computer-implemented control configured to control the movements of the at least one harvesting subsystem and the at least one collecting subsystem in coordinated manner and wherein the control is configured to select from the unharvested fruits detected and localized by the detection subsystem in the harvesting range a specific fruit to be harvested and to position the harvesting end effector for harvesting the specific fruit, and wherein the control is also configured to displace the at least one collecting opening to a position close to the specific fruit so that the harvesting end effector can release the specific fruit into the nearby collecting opening after harvesting thereof.

Providing at least one collecting subsystem and harvesting subsystem which are controlled in coordinated manner relative to each other enables the cycle time between successive harvesting operations to be reduced. For this purpose the collecting subsystem is provided with a collecting opening into which harvested fruits can be placed or released. The collecting opening can for instance be formed by an upright edge or an opening of a tube. The collecting opening preferably extends substantially at right angles to the direction of the force of gravity. Making the collecting opening displaceable enables it to always be positioned close to and/or under the location where the harvesting operation is taking place. Hereby, the harvested fruit need only be displaced over a short distance before the fruit can be placed or released. The collecting opening is connected to a collecting reservoir, whereby fruits placed into the collecting opening come to lie in the collecting reservoir.

A detection subsystem, such as for instance a computer vision subsystem, is provided to detect and localize unharvested fruits in the harvesting range of the robotic manipulator with a harvesting end effector. The detection subsystem can also be used to detect and localize unharvested fruits outside the harvesting range and/or to map the relevant ambient factors, such as the shape of the crop being harvested. The detection system can also be applied to support guiding of the movements of the positionable components of the subsystems.

For coordinated control of the movements of the at least one harvesting subsystem and the at least one collecting subsystem a computer-implemented control is provided. The control provides for the guiding of the movements. The control is also configured to select a specific fruit to be harvested, for instance depending on a harvesting plan and/or the accessibility of the fruit. The control here provides for the positioning of the harvesting end effector for harvesting of the specific fruit, the activation of the harvesting operation, and for the harvested fruit being displaced to the nearby collecting opening and being placed therein. Because the collecting opening has been positioned close to and/or under the location of the harvesting operation by the control, the harvesting end effector need only bridge a short distance in order to place the harvested fruit, this decreasing the cycle time.

In another embodiment of a harvesting system according to the invention the harvesting end effector is a picking end effector.

For harvesting of for instance apples it is desirable for the apple to detach at the natural break-off surface at the attachment so that the apple tree does not sustain any unnecessary damage. Applying a picking end effector as harvesting end effector enables the apples to be harvested in optimal manner.

Another embodiment of a harvesting system according to the invention is a harvesting system wherein the collecting opening comprises a net. Providing a net in the collecting opening enables a fruit being released into the collecting opening to be caught without sustaining damage such as bruising. This enables the releasing to be done even faster. Alternatively or additionally, the hard surfaces in and/or around the collecting opening can also be provided with for instance a resilient surface, such as for instance a foam layer. Preventing any hard surfaces from being present in the collecting opening prevents the releasing or placing from having to be done very carefully. The chances of bruising or other damage to the fruit is also reduced.

Also according to the invention is an embodiment of a harvesting system wherein at least one collecting subsystem comprises a second robotic manipulator wherein the collecting opening is an end effector of the second robotic manipulator.

A collecting subsystem can be embodied with a robotic manipulator with a collecting opening as end effector. Assigning the collecting subsystem the same degrees of freedom as the harvesting subsystem enables the relative positioning of the two subsystems to be maintained in more different environments.

In yet another embodiment of a harvesting system according to the invention at least one collecting subsystem comprises a conveyor belt extending from the collecting opening to the collecting reservoir.

Providing a conveyor belt between the collecting opening and the collecting reservoir enables transport of the fruits placed or released into the collecting opening to be controlled over a greater distance so that the fruits are not dependent on a height difference being present in the path between the collecting opening and the collecting reservoir.

In a preferred embodiment of a harvesting system according to the invention the control is also configured to identify from the unharvested fruits detected and localized by the detection subsystem at least one fruit with an increased drop probability during harvesting of the specific fruit, and to position the at least one collecting opening in a predicted drop path of the at least one fruit with an increased drop probability.

When harvesting a specific fruit, there is a possibility of undesired dropping of other, often nearby, fruits due to the touching of the crop necessitated by the harvesting operation. Such fruits often become bruised when they drop, rendering them unsuitable for further sale. Having the control determine a drop probability of unharvested fruits and of at least one fruit with an increased drop probability, preferably in any case of the fruit with the highest drop probability, and also determine a drop path, enables the collecting opening to be positioned in this drop path. If the fruit then drops unexpectedly, it will then end up in the collecting opening if a drop path was predicted correctly. A plurality of drop paths can also be predicted, wherein the collecting opening can then be placed such that it intersects the most or the most likely drop paths. When no fruits with an increased drop probability can be identified, or when such fruits are not located close to the specific fruit to be harvested, the control can alternatively predict the drop path of the specific fruit to be harvested and position the collecting opening in this drop path so that, in the event of a harvesting error wherein the harvesting end effector unexpectedly loses the fruit, the fruit ends up in the collecting opening.

In a further aspect the invention also relates to a method for autonomous harvesting of unharvested fruit, such as for instance pome fruit such as apples or stone fruit, with a system according to any one of the foregoing claims, comprising the steps of:
- positioning the at least one collecting subsystem relative to the unharvested fruits, wherein the collecting range extends close to and/or under at least a part of the unharvested fruits;
- positioning the at least one harvesting subsystem relative to the unharvested fruits, wherein at least a part of the unharvested fruits are located in the harvesting range;
- detecting and localizing unharvested fruits in at least the harvesting range by means of the detection subsystem;
- selecting a specific fruit to be harvested from the detected and localized unharvested fruits in the harvesting range;
- displacing the at least one collecting opening to a position close to and/or under the specific fruit;
- positioning the harvesting end effector for harvesting the specific fruit, and harvesting the specific fruit;
- releasing the harvested specific fruit into the collecting opening located close to and/or under the harvesting end effector.

The at least one collecting subsystem and the at least one harvesting subsystem of the harvesting system must be brought within the range of the unharvested fruits to be harvested. These steps can optionally also take place autonomously by arranging the harvesting system or the subsystems thereof on a mobile chassis.

The harvesting range preferably extends in or, optionally partially, above the collecting range. Because fruit hangs from the crop, the harvesting operation often already comprises a downward movement. Arranging the collecting range under or overlapping the harvesting range enables the cycle time to be reduced still further.

In a preferred embodiment of a method according to the invention the method comprises as alternative to the step of displacing the at least one collecting opening to a position close to and/or under the specific fruit the steps of:
- identifying from the detected and localized unharvested fruits at least one fruit with an increased drop probability during harvesting of the specific fruit;
- determining a predicted drop path of the at least one fruit with an increased drop probability;
- positioning the at least one collecting opening in the predicted drop path.

Predicting a drop path of a fruit with an increased drop probability enables the collecting opening to be arranged in the predicted drop path so that, when the fruit in question drops, it can be caught in the collecting opening.

These and other features of the invention are further elucidated with reference to the accompanying figures.
Figure 1 shows a schematic representation of a harvesting system according to the invention.
Figure 2 shows a flow diagram of a method according to the invention.
Figures 3A-C show steps of a method according to the invention.

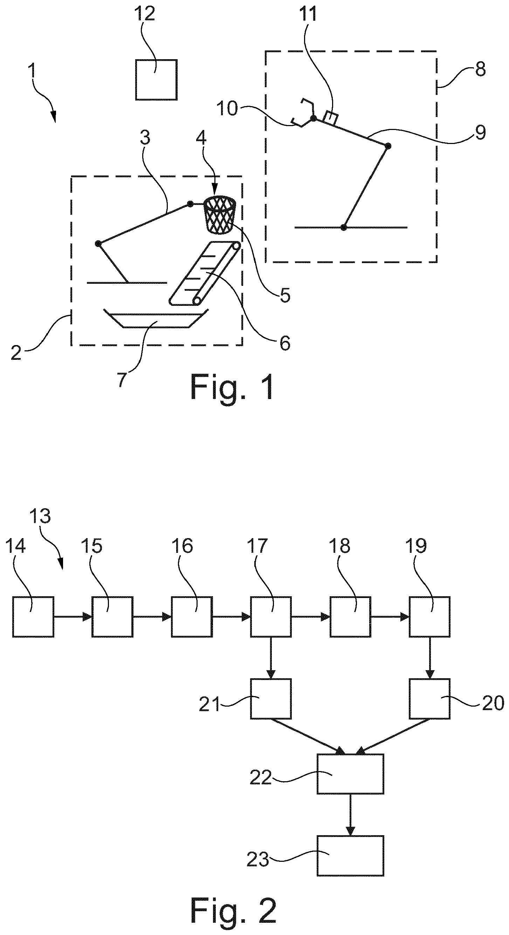

Figure 1 shows a harvesting system 1 with a collecting subsystem 2. The collecting subsystem 2 has a robotic manipulator 3 on which a collecting opening 4 is arranged as end effector. The collecting opening 4 is provided with a net 5 which is connected by means of a conveyor belt 6 to a collecting reservoir 7 for collecting and storing harvested fruit. The harvesting subsystem 8 is provided with a robotic manipulator 9 with a harvesting end effector 10. A computer vision subsystem 11 is arranged on the robotic manipulator 9 for the purpose of detecting and localizing unharvested fruits in and in the vicinity of the harvesting range. A computer-implemented control 12 is configured to control the subsystems in coordinated manner and to process the detections by the detection subsystem 11.

Figure 2 shows a flow diagram 13 showing the steps of an embodiment of a method according to the invention. In a first step 14 the at least one collecting subsystem is positioned relative to the unharvested fruits such that the collecting range extends close to and/or under at least a part of the unharvested fruits. In a subsequent step 15 the at least one harvesting subsystem is also positioned relative to the unharvested fruits, such that at least a part of the unharvested fruits are located in the harvesting range. In a subsequent step 16 unharvested fruits are detected and localized in at least the harvesting range by the detection subsystem. In the subsequent step 17 the control selects a specific fruit to be harvested from the detected and localized unharvested fruits in the harvesting range. In the next step 18 at least one fruit with an increased drop probability during harvesting of the specific fruit is identified from the detected and localized unharvested fruits, and a predicted drop path of the at least one fruit with an increased drop probability is then determined in the subsequent step 19. The collecting opening is then positioned in the predicted drop path in a subsequent step 20. An alternative step 21, wherein the collecting opening is immediately displaced to a position close to and/or under the specific fruit, may also follow after step 17. Following on from this, in a subsequent step 22 the harvesting end effector is positioned for harvesting the specific fruit, and the specific fruit is harvested. After harvesting, the harvested fruit is in the subsequent step 23 placed or released into the collecting opening lying close to and/or under the harvesting end effector. The method can be repeated from step 16 until all the detected fruits have been harvested.

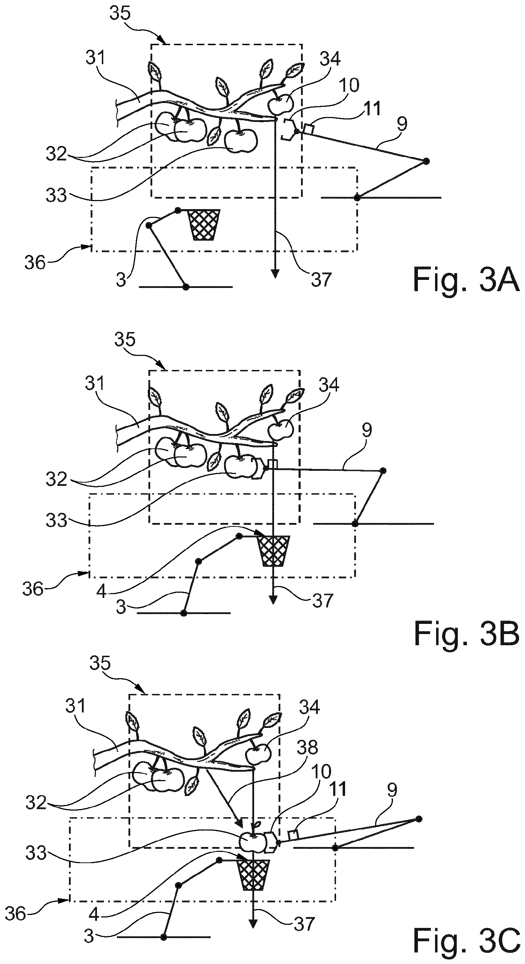

Figures 3A-C show a branch 31 of an apple tree on which hang unharvested apples 32-34. A detection subsystem 11 arranged on the robotic manipulator 9 of the harvesting subsystem detects and localizes the unharvested apples 32, 34 in the harvesting range 35. The manipulator 9 is positioned so that all unharvested apples 32-34 are located in the harvesting range 35.

A specific apple 33 to be harvested is selected from the unharvested apples 32-34 detected and localized in the harvesting range 35.

The collecting range 36 of the robotic manipulator 3 of the collecting subsystem, the other components of which, such as for instance a conveyor belt and collecting reservoir, are not shown, is located close to and under the unharvested apples 32-34.

An apple 34 with an increased drop probability during harvesting of the specific apple 33 is identified from the unharvested apples 32, 34. A drop path 37 of the apple 34 with an increased drop probability is predicted.

In figure 3B the collecting opening 4 of the robotic manipulator 3 of the collecting subsystem is positioned in the predicted drop path 37 so that, if the apple 34 were to unexpectedly drops during picking of the specific apple 33 to be harvested, it will end up in collecting opening 4. The harvesting end effector 10 has been displaced toward the specific apple 33 to be harvested for the purpose of performing the harvesting action.

In figure 3C the harvested apple 33 has been displaced in the direction of arrow 38, toward collecting opening 4, and is released into it. The end effector 10 of robotic manipulator 9 of the harvesting system thus need only move a short distance 38 for the purpose of releasing the harvested apple 38, allowing the cycle time to be reduced.

## Claims

1. A harvesting system for autonomous harvesting of fruit, such as for instance pome fruit such as apples or stone fruit, comprising:
- at least one collecting subsystem comprising a collecting opening, which collecting opening is connected to a collecting reservoir for collecting and storing harvested fruits, and wherein the collecting opening is autonomously displaceable in a collecting range;
- at least one harvesting subsystem comprising a first robotic manipulator with a harvesting end effector configured to harvest a specific fruit in a harvesting range;
- a detection subsystem, such as for instance a computer vision subsystem, configured to detect and localize at least in the harvesting range unharvested fruits;
- a computer-implemented control configured to control the movements of the at least one harvesting subsystem and the at least one collecting subsystem in coordinated manner and wherein the control is configured to select from the unharvested fruits detected and localized by the detection subsystem in the harvesting range a specific fruit to be harvested and to position the harvesting end effector for harvesting the specific fruit, and wherein the control is also configured to displace the at least one collecting opening to a position close to the specific fruit so that the harvesting end effector can release the specific fruit into the nearby collecting opening after harvesting thereof.

2. Harvesting system according to claim 1, wherein the harvesting end effector is a picking end effector.

3. Harvesting system according to claim 1 or 2,
wherein the collecting opening comprises a net.

4. Harvesting system according to any one of the foregoing claims, wherein at least one collecting subsystem comprises a second robotic manipulator wherein the collecting opening is an end effector of the second robotic manipulator.

5. Harvesting system according to any one of the foregoing claims, wherein at least one collecting subsystem comprises a conveyor belt extending from the collecting opening to the collecting reservoir.

6. Harvesting system according to any one of the foregoing claims, wherein the control is also configured to identify from the unharvested fruits detected and localized by the detection subsystem at least one fruit with an increased drop probability during harvesting of the specific fruit, and to position the at least one collecting opening in a predicted drop path of the at least one fruit with an increased drop probability.

7. A method for autonomous harvesting of unharvested fruit, such as for instance pome fruit such as apples or stone fruit, with a system according to any one of the foregoing claims, comprising the steps of:
- positioning the at least one collecting subsystem relative to the unharvested fruits, wherein the collecting range extends close to and/or under at least a part of the unharvested fruits;
- positioning the at least one harvesting subsystem relative to the unharvested fruits, wherein at least a part of the unharvested fruits are located in the harvesting range;
- detecting and localizing unharvested fruits in at least the harvesting range by means of the detection subsystem;
- selecting a specific fruit to be harvested from the detected and localized unharvested fruits in the harvesting range;
- displacing the at least one collecting opening to a position close to and/or under the specific fruit;
- positioning the harvesting end effector for harvesting the specific fruit, and harvesting the specific fruit;
- releasing the harvested specific fruit into the collecting opening located close to and/or under the harvesting end effector.

8. Method according to claim 7, wherein the method comprises as alternative to the step of displacing the at least one collecting opening to a position close to and/or under the specific fruit the steps of:
- identifying from the detected and localized unharvested fruits at least one fruit with an increased drop probability during harvesting of the specific fruit;
- determining a predicted drop path of the at least one fruit with an increased drop probability;
- positioning the at least one collecting opening in the predicted drop path.
